# EUROPÄISCHE PATENTSCHRIFT

(11) **EP 0 549 521 B1**
(45) Veröffentlichungstag und Bekanntmachung des Hinweises auf die Patenterteilung: **07.01.1998**
(21) Anmeldenummer: 92810892.7
(22) Anmeldetag: 17.11.1992
(51) Int. Cl.: C22C 1/00, B32B 15/01

(54) **Gegenstand mit einer zumindest teilweise amorphen Glasmetallfolie**
Article with a glassy, at least partially amorphous, metal foil
Objet avec une feuille en alliage vitreux, au moins partiellement amorphe

(30) Priorität: 24.12.1991 CH 3847/91
(43) Veröffentlichungstag der Anmeldung: 30.06.1993
(73) Patentinhaber: SULZER INNOTEC AG, CH-8401 Winterthur (CH)
(72) Erfinder: Arnosti, Giorgio, 1406 Erlandsfontein/Transvaal (ZA); Straub, Werner, CH-8477 Oberstammheim (CH); Bölle, Erich, CH-8400 Winterthur (CH)
(74) Vertreter: Trieblnig, Adolf

(56) Entgegenhaltungen:
- WO-A-84/04899
- DE-A- 3 730 862

## Beschreibung

Die Erfindung betrifft einen Gegenstand mit einer zumindest teilweise amorphen Glasmetallfolie, welche ein Metall aus der Gruppe der Elemente Eisen, Nickel, Chrom, Kobalt, Vanadium oder aus einer Kombination dieser Elemente und ein Metalloid aus der Gruppe der Elemente Phosphor, Kohlenstoff, Bor oder aus einer Kombination dieser Elemente sowie ein Element aus der Gruppe Aluminium, Silizium, Zinn, Antimon, Germanium, Indium, Beryllium oder eine Kombination aus diesen Elementen enthält.

Ferner betrifft die Erfindung ein Verfahren zum Herstellen des Gegenstandes.

Aus der US-Patentschrift Re. 32 925 sind band- und blattförmige Gegenstände der genannten Art bekannt, welche je aus einer mindestens 50 % bis 100 % amorphen Metallegierung bestehen und besonders günstige physikalische Eigenschaften - z.B. eine hohe Zugfestigkeit, eine hohe Flexibilität sowie eine hohe Verschleiss- und Korrosionsbeständigkeit - aufweisen. Bei den bekannten Gegenständen sind die Beschaffenheit und die Härte der Oberfläche im wesentlichen durch die Zusammensetzung der Legierung und das Herstellungsverfahren gegeben, durch welches eine dem jeweiligen Verwendungszweck des Gegenstandes entsprechende Haupteigenschaft, z.B. eine hohe Flexibilität des Gegenstandes, eine vorbestimmte, relativ grosse Härte der Oberfläche oder eine Kombination der genannten Eigenschaften erzielt werden soll.

Der Erfindung liegt die Aufgabe zugrunde, einen verbesserten , für einen erweiterten Anwendungsbereich geeigneten Gegenstand der eingangs genannten Art zu schaffen, der ohne wesentliche Beeinträchtigung der durch die Zusammensetzung der Legierung bestimmten, bekannten Eigenschaften der Glasmetallfolie eine von der Zusammensetzung der Legierung getrennt beeinflussbare Oberflächenbeschaffenheit aufweist.

Diese Aufgabe wird erfindungsgemäss dadurch gelöst, dass mindestens eine Seite der Glasmetallfolie mit einer Deckschicht versehen ist, die ein Material enthält, dessen Härte grösser ist als diejenige der Glasmetallfolie.

Ein Verfahren zur Herstellung des Gegenstandes nach der Erfindung besteht darin, dass die Glasmetallfolie einer Beschichtungseinrichtung zugeführt wird, durch welche auf mindestens eine Seite der Glasmetallfolie eine Deckschicht aufgebracht wird, die einen Hartstoff enthält.

Die erfindungsgemäss aufgebrachte Deckschicht gestattet die Ausbildung einer Oberfläche mit einer innerhalb eines relativ weiten Bereichs wählbaren Härte, ohne die Struktur der Glasmetallfolie zu beeinträchtigen, die selbst mit einer relativ harten, widerstandsfähigen Oberfläche ausgeführt sein kann und die dementsprechend als Trägermaterial für alle gängigen Beschichtungsverfahren geeignet ist, welche die Aufbringung der Deckschicht bei einer Temperaturführung gestatten, die eine Rekristallisation der Glasmetallfolie vermeidet.

In den abhängigen Patentansprüchen sind vorteilhafte Weiterbildungen des Erfindungsgegenstandes angegeben.

Weitere Einzelheiten und Merkmale ergeben sich aus der folgenden Beschreibung von in der Zeichnung schematisch dargestellten Ausführungsbeispielen nach der Erfindung, in Verbindung mit den Patentansprüchen. Es zeigen:
- Fig. 1: Einen Teilquerschnitt eines erfindungsgemäss ausgebildeten Bandes in einer Darstellung, die einer photographischen Aufnahme durch ein Lichtmikroskop bei 500-facher Vergrösserung entspricht;
- Fig. 2 und 3: entsprechende Darstellungen von Teilquerschnitten weiterer Bänder, je in einer anderen Ausführungsform.

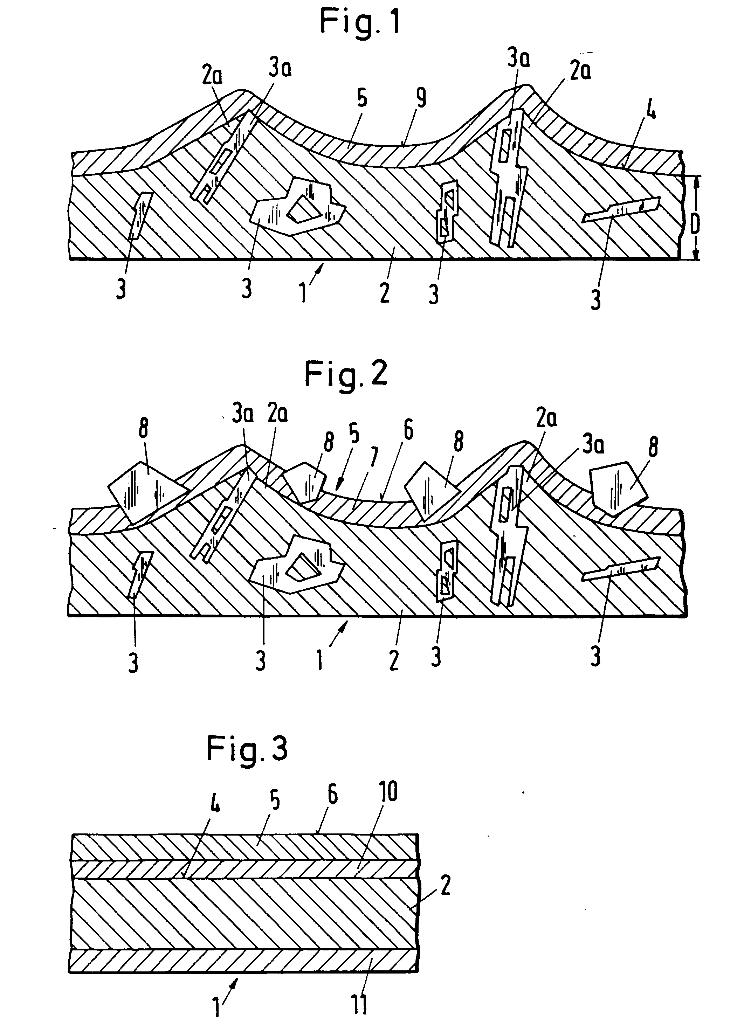

Das Band nach Fig. 1 enthält eine z.B. durch ein Schmelzspinnverfahren (melt spinning) hergestellte Glasmetallfolie 1, die in einer glasartig, beim dargestellten Beispiel amorph erstarrten Metallmatrix 2 Einlagerungen von in Form langgestreckter Kristalle erstarrten Hartpartikeln 3 und 3a enthält. In der Metallmatrix 2, die jedoch teilweise auch ein mikrokristallines Gefüge aufweisen kann, können zusätzlich noch nicht dargestellte Mikrokristalle aus Hartstoffen enthalten sein. Die in unregelmässigen Kristallformen erstarrten Hartpartikel 3 und 3a, welche darstellungsgemäss Innenhohlräume, Einschnitte, Ecken und Kanten aufweisen können, sind im amorphen oder teilweise mikrokristallinen Gefüge-der Metallmatrix 2 fest eingebettet. Je nach Grösse und Lage der Hartpartikel 3, 3a und entsprechend der jeweiligen Mindestdicke D der Metallmatrix 2, die beim dargestellten Band z.B. ca. 50 µm betragen kann, verbleiben die Hartpartikel 3, deren Länge darstellungsgemäss gleich oder kleiner ist als die Mindestdicke D, innerhalb der Metallmatrix 2, während die Hartpartikel 3a, welche eine grössere Länge aufweisen und/oder näher der in Fig. 1 oberen freien Oberfläche 4 der Metallmatrix 2 angeordnet sind, mehr oder weniger weit über diese Oberfläche 4 vorstehen, wenn sie vor dem Erstarren der Schmelze der Metallmatrix 2 aufgerichtet werden. Dabei sind die Spitzen dieser Hartpartikel 3a in kragenartigen Erhebungen 2a der Metallmatrix 2 gehalten, welche die Haftfähigkeit der Hartpartikel 3a im Grundmaterial erhöhen und deren Ausbrechen aus der Metallmatrix 2 verhindern. Ein entsprechendes Band mit vorwiegend nahe der freien Oberfläche 4 und/oder über diese vorstehend angeordneten Hartstoffpartikeln, dessen Herstellung nicht Gegenstand der vorliegenden Erfindung ist, ist aus der EP-A-0 326 785 bekannt.

In der dargestellten Glasmetallfolie 1 können die Hartstoffpartikel 3 und 3a, wie in der EP-A-0 326 785 beschrieben, durch Metallboride, -carbide oder, -oxide, darüberhinaus durch entsprechende Verbindungen der Elemente Stickstoff (Nitride), Fluor (Fluoride), Silizium (Silizide), Phosphor (Phosphide), Schwefel (Sulfide) oder Chlor (Chloride) sowie durch intermetallische Verbindungen, Kunststoffpartikel oder Kombinationen dieser Teile gebildet sein. Beim dargestellten Ausführungsbeispiel sind die Hartpartikel 3, 3a durch Chromborid-Kristalle gebildet, wobei die Oberfläche 4 der Metallmatrix 2 mit einer innerhalb eines relativ grossen Bereichs vorbestimmbaren Rauhtiefe von z.B. bis 250 µm ausgeführt werden kann.

Wie aus der Fig. 1 weiter hervorgeht, ist die Glasmetallfolie 1 mit einer auf die Oberfläche 4 und die Spitzen der Hartstoffpartikel 3a aufgebrachten, im wesentlichen homogenen Deckschicht 5 aus einem Hartstoff versehen, der beim dargestellten Beispiel im wesentlichen aus diamantartigem Kohlenstoff (Diamond-Like Carbon) besteht. Die Deckschicht 5 kann in einer nicht dargestellten Beschichtungseinrichtung durch ein bekanntes Beschichtungsverfahren, etwa durch chemisch oder physikalisch bedingte Abscheidung aus der Gasphase (chemical vapour deposition = CVD-Verfahren bzw. physical vapour deposition = PVD-Verfahren), durch plasma-aktiviertes Aufdampfen (plasma assisted vapour deposition) oder Thermisches Spritzen, z.B. Plasmaspritzen, auf die mit hoher Zugfestigkeit und Flexibilität ausführbare Glasmetallfolie 1 aufgebracht werden, die aufgrund ihrer mit einer vorbestimmten Härte und Rauheit ausführbaren Oberfläche 4 als Substrat für alle in diesem Zusammenhang anwendbaren Beschichtungsverfahren geeignet ist und die eine gute Haftung der Deckschicht 5 gewährleistet.

Die Rauheit der Oberfläche 4 der Metallmatrix 2 kann, etwa nach dem in der EP-A-0 326 785 beschriebenen Verfahren, durch Steuerung der Produktionsparameter beeinflusst werden. Entsprechend der Darstellung nach Fig. 1 ist die Glasmetallfolie 1 mit einer relativ groben Oberfläche 4 ausgeführt. Durch Aufbringen der Deckschicht 5 auf diese Oberfläche 4 wird somit ein Trennwerkzeug (Schleifwerkzeug) mit entsprechend rauher Oberfläche 6 und diamantähnlicher Härte erhalten. Durch Veränderung der Produktionsparameter, z.B. der Temperaturführung, bei der Herstellung der Glasmetallfolie 1 können entsprechend geringere, beliebig abgestufte Rauhwerte der Oberfläche 4 und damit der Oberfläche 6 erhalten werden, wobei auch eine nicht dargestellte, annähernd glatte Oberfläche 4 erzielt und damit die mit der Deckschicht 5 versehene Glasmetallfolie 1 als Bauteil mit einer relativ glatten Oberfläche 6 verwendet werden kann, die eine entsprechend hohe Verschleissfestigkeit und/oder entsprechend günstige Gleiteigenschaften aufweist. Die Deckschicht 5 kann auch aus einem anderen Hartstoff gebildet sein, der im wesentlichen aus einer Verbindung mindestens eines der Elemente Bor, Kohlenstoff, Stickstoff, Sauerstoff, Silizium oder Phosphor mit einem Metall, z.B. Titannitrid, Chromcarbid, besteht.

Entsprechend der Darstellung nach Fig. 2 kann die Deckschicht 5 auch durch eine heterogene Schicht aus einem Trägermaterial mit eingelagerten Partikeln 8 aus einem Hartstoff gebildet sein, der ebenfalls im wesentlichen aus einer Verbindung mindestens eines der Elemente Bor, Kohlenstoff, Stickstoff, Sauerstoff, Silizium oder Phosphor, z.B. aus Diamant oder kubischem Bornitrid, bestehen kann. Das Trägermaterial ist in einer mit der Glasmetallfolie 1 verbundenen Trägerschicht 7 angeordnet, die im wesentlichen aus mindestens einem auf die Glasmetallfolie 1 elektrolytisch (galvanisch) aufbringbaren Metall aus der Gruppe Silber, Aluminium, Kadmium, Chrom, Kobalt, Kupfer, Nickel, Blei, Zinn, Zink oder einer entsprechenden Verbindung, z.B. Nickelphosphor, besteht. Bei der dargestellten Ausführung kann die Trägerschicht 7 aus Nickel bestehen.

Eine entsprechende, z.B. aus Kupfer, Nickel oder einer Kombination dieser Metalle bestehende Trägerschicht 7 kann auch stromlos aufgebracht sein. Nach einer anderen Ausführungsform kann die z.B. aus Aluminium, Zink, Zinn, Blei oder einer Kombination dieser Metalle bestehende Trägerschicht 7 durch ein Schmelztauchverfahren auf die Glasmetallfolie 1 aufgebracht sein. Nach einer weiteren Ausführungsform kann die z.B. aus Kadmium, Zink oder einer Kombination dieser Metalle bestehende Trägerschicht 7 durch chemisch/mechanische Abscheidung auf die Glasmetallfolie 1 aufgebracht werden. Nach einer weiteren Ausführungsform kann die Trägerschicht 7 aus einem auf die Glasmetallfolie 1 durch ein Spritzverfahren, insbesondere Thermisches Spritzen, aufbringbaren Trägermaterial bestehen. Als Trägermaterial kann auch ein Kunststoff, z.B. Polyester oder ein keramischer Werkstoff, z.B. Aluminiumoxid, vorgesehen sein.

Die in der Trägerschicht 7 gehaltenen Partikel 8, die bei der dargestellten Ausführung z.B. aus Diamant bestehen, können über die Hartstoffpartikel 3a der Glasmetallfolie 1 vorstehen und mit den entsprechenden übrigen Partikeln 8 der Deckschicht 5 eine Arbeitsfläche eines Schleifwerkzeugs grösstmöglicher Härte bilden oder, wie in Fig. 2 angedeutet, mit den Spitzen der Hartstoffpartikel 3a der Glasmetallfolie 1 eine entsprechende Arbeitsfläche bilden, welche z.B. eine Verstärkung der durch die Harstoffpartikel 3a der Glasmetallfolie 1 gegebenen Abrasionswirkung ermöglicht. Beim Beispiel nach Fig. 2 wird dieser Effekt erreicht, wenn die Spitzen der Hartstoffpartikel 3a von dem sie überdeckenden Trägermaterial - dem Nickel der Trägerschicht 7 - freigelegt sind.

Beim Band nach Fig. 3 ist die von Hartstoffpartikeln freie Metallmatrix 2 der Glasmetallfolie mit einer im wesentlichen glatten freien Oberfläche 4 ausgeführt, auf welcher eine elektrolytisch, stromlos, durch Schmelztauchen, chemisch/mechanische Abscheidung oder ein Spritzverfahren aufbringbare Zwischenschicht 10 angeordnet ist, die aus einem anderen, z.B. weicheren Material besteht als die Glasmetallfolie 1 und die Deckschicht 5. Auf der Zwischenschicht 10 ist in der für die Befestigung an der Glasmetallfolie 1 beschriebenen Weise - elektrolytisch (galvanisch), stromlos, durch Schmelztauchen, chemisch/mechanische Abscheidung oder durch eines der vorstehend erwähnten CVD-, PVD- oder Spritzverfahren - die Deckschicht 5 angebracht. Auf der der freien Oberfläche 4 gegenüberliegenden Unterseite der Glasmetallfolie 1 kann darstellungsgemäss eine der Zwischenschicht 10 entsprechende, in entsprechender Weise aufbringbare und vorzugsweise aus dem gleichen Material bestehende Ausgleichsschicht 11 angebracht sein, die z.B. einseitige Verformungen der Glasmetallfolie 1 verhindert. Die Deckschicht 5 kann durch eine Trägerschicht 7 mit Hartpartikeln 8 oder, entsprechend der Darstellung nach Fig. 3, durch eine homogene Hartstoffschicht, z.B. aus diamantartigem Kohlenstoff, gebildet sein, während die Zwischenschicht 10 und die Ausgleichsschicht 11 z.B. aus Kupfer bestehen. Eine derartige Zwischenschicht 10 kann vorgesehen sein, um unterschiedliche Wärmedehnungen zwischen der Glasmetallfolie 1 und der Deckschicht 5 auszugleichen oder um die Haftung der Deckschicht 5 auf der Glasmetallfolie zu verbessern bzw. eine derartige Haftung zu ermöglichen. Es versteht sich, dass auch bei Ausführungen entsprechend den Figuren 1 und 2 eine entsprechende, zwischen der Glasmetallfolie 1 und der Deckschicht 5 bzw. der Trägerschicht 7 angeordnete Zwischenschicht 10 und/oder eine entsprechende Ausgleichsschicht 11 vorgesehen sein kann. Es sind auch Ausführungen möglich, bei denen beide Seiten der Glasmetallfolie 1 je mit einer entsprechenden Deckschicht 5 versehen sind.

Bei der Ausführung nach Fig. 3 bildet die Deckschicht 5 eine verschleissfeste Gleitfläche.

Das erfindungsgemäss ausgebildete Band kann mit einer Zugfestigkeit ausgeführt sein, die drei- bis viermal grösser ist als diejenige eines üblichen Baustahls, und kann eine Langzeit-Temperaturbeständigkeit bis ca. 200°C bis 300°C aufweisen. Aus dem Band kann, z.B. durch Kondensatoren-Entladungsschweissen, ein endloses Band gefertigt werden, welches insbesondere als flexibles Trennwerkzeug, z.B. zum Schleifen, Schneiden, Honen u.s.w., verwendbar ist. Aus dem Band können ferner scheibenartige Trennteile gefertigt, z.B. gestanzt, werden, welche als flexible Schleifteile verwendet oder auf einem Träger angebracht, z.B. angeklebt, und als starre Trennteile (Schleifteile) oder, nach Art einer Trennscheibe, als Schneidorgan verwendet werden.

## Patentansprüche

1. Gegenstand mit einer zumindest teilweise amorphen Glasmetallfolie, welche ein Metall aus der Gruppe der Elemente Eisen, Nickel, Chrom, Kobalt, Vanadium oder aus einer Kombination dieser Elemente und ein Metalloid aus der Gruppe der Elemente Phosphor, Kohlenstoff, Bor oder aus einer Kombination dieser Elemente sowie ein Element aus der Gruppe Aluminium, Silizium, Zinn, Antimon, Germanium, Indium, Beryllium oder eine Kombination aus diesen Elementen enthält, **dadurch gekennzeichnet,** dass mindestens eine Seite der Glasmetallfolie (1) mit einer Deckschicht (5) versehen ist, die ein Material enthält, dessen Härte grösser ist als diejenige der Glasmetallfolie (1).

2. Gegenstand nach Anspruch 1, dadurch gekennzeichnet, dass die Glasmetallfolie (1) Einlagerungen von Hartpartikeln (3, 3a) enthält, die als primäre Ausscheidungen aus der Schmelze vorwiegend nahe einer freien Oberfläche (4) des erstarrten Grundmaterials und/oder über diese vorstehend angeordnet sind, und dass die Deckschicht (5) auf dieser Oberfläche (4) angeordnet ist.

3. Gegenstand nach Anspruch 1 oder 2, dadurch gekennzeichnet, dass die Deckschicht (5) auf einer auf die Glasmetallfolie (1) aufgebrachten Zwischenschicht (10) angeordnet ist, die aus einem anderen Material besteht als die Glasmetallfolie (1) und die Deckschicht (5).

4. Gegenstand nach einem der Ansprüche 1 bis 3, dadurch gekennzeichnet, dass die Deckschicht (5) Partikel (8) aus einem Hartstoff enthält, der im wesentlichen aus einer Verbindung mindestens eines der Elemente Bor, Kohlenstoff, Stickstoff, Sauerstoff, Silizium-oder Phosphor, z.B. aus Diamant oder kubischem Bornitrid, besteht.

5. Gegenstand nach Anspruch 4, dadurch gekennzeichnet, dass die Deckschicht (5) eine mit der Glasmetallfolie (1) bzw. der Zwischenschicht (10) verbundene Trägerschicht (7) enthält, in der die Hartstoffpartikel (8) eingelagert sind.

6. Gegenstand nach Anspruch 5, dadurch gekennzeichnet, dass die Trägerschicht (7) im wesentlichen aus mindestens einem auf die Glasmetallfolie (1) bzw. die Zwischenschicht (10) elektrolytisch (galvanisch) aufbringbaren Metall aus der Gruppe Silber, Aluminium, Kadmium, Chrom, Kobalt, Kupfer, Nickel, Blei, Zinn, Zink oder einer entsprechenden Verbindung besteht.

7. Gegenstand nach Anspruch 5, dadurch gekennzeichnet, dass die Trägerschicht (7) im wesentlichen aus mindestens einem auf die Glasmetallfolie (1) bzw. die Zwischenschicht (10) durch Schmelztauchen aufbringbaren Metall, z.B. Aluminium, Zink, Zinn, Blei oder einer Kombination dieser Metalle, besteht.

8. Gegenstand nach Anspruch 5, dadurch gekennzeichnet, dass die Trägerschicht (7) im wesentlichen aus mindestens einem auf die Glasmetallfolie (1) bzw. die Zwischenschicht (10) stromlos aufbringbaren Metall, z.B. Kupfer, Nickel oder einer Kombination dieser Metalle, besteht.

9. Gegenstand nach Anspruch 5, dadurch gekennzeichnet, dass die Trägerschicht (7) im wesentlichen aus mindestens einem auf die Glasmetallfolie (1) bzw. die Zwischenschicht (10) durch chemisch/mechanische Abscheidung aufbringbaren Metall, z.B. Kadmium, Zink oder einer Kombination dieser Metalle, besteht.

10. Gegenstand nach Anspruch 5, dadurch gekennzeichnet, dass die Trägerschicht (7) aus einem auf die Glasmetallfolie (1) bzw. die Zwischenschicht (10) durch ein Spritzverfahren, insbesondere thermisches Spritzen, aufbringbaren Trägermaterial besteht.

11. Gegenstand nach Anspruch 10, dadurch gekennzeichnet, dass das Trägermaterial ein Kunststoff, z.B. Polyester, ist.

12. Gegenstand nach Anspruch 10, dadurch gekennzeichnet, dass das Trägermaterial ein keramischer Werkstoff, z.B. Aluminiumoxid, ist.

13. Gegenstand nach einem der Ansprüche 1 bis 3, dadurch gekennzeichnet, dass die Deckschicht (5) durch eine im wesentlichen homogene Schicht aus einem Hartstoff gebildet ist.

14. Gegenstand nach Anspruch 13, dadurch gekennzeichnet, dass der Hartstoff im wesentlichen aus einem auf die Glasmetallfolie (1) bzw. die Zwischenschicht (10) durch chemisch oder physikalisch bedingte Abscheidung aus der Gasphase oder Thermisches Spritzen, z.B. Plasmaspritzen, aufbringbaren Werkstoff, z.B. diamantartiger Kohlenstoff oder eine Verbindung zwischen einem Metall und mindestens einen der Elemente Bor, Kohlenstoff, Stickstoff, Sauerstoff, Silizium und Phosphor, besteht.

15. Gegenstand nach einem der vorangehenden Ansprüche, dadurch gekennzeichnet, dass die Glasmetallfolie (1) in Form eines endlosen Bandes ausgeführt ist.

16. Verfahren zum Herstellen des Gegenstandes nach einem der vorangehenden Ansprüche, dadurch gekennzeichnet, dass die Glasmetallfolie (1) einer Beschichtungseinrichtung zugeführt wird, durch welche auf mindestens eine Seite der Glasmetallfolie (1) eine Deckschicht (5) aufgebracht wird, die einen Hartstoff enthält.

17. Verfahren nach Anspruch 16, dadurch gekennzeichnet, dass auf die Glasmetallfolie (1) vorgängig mindestens eine Zwischenschicht (10) aufgebracht wird, die aus einem anderen Material besteht als die Glasmetallfolie (1) und die Deckschicht (5), und dass die Deckschicht (5) auf diese Zwischenschicht (10) aufgebracht wird.

18. Verwendung des Gegenstandes nach einem der vorangehenden Ansprüche 1-15 als Trennwerkzeug.

19. Verwendung des Gegenstandes nach einem der vorangehenden Ansprüche 1-15 als Bauteil mit besonderen Verschleiss- und/oder Gleiteigenschaften.

## Claims

1. Object with an at least partly amorphous glass-metal film, which comprises a metal from the iron, nickel, chromium, cobalt, vanadium group of elements or-consisting of a combination of these elements and a metalloid from the phosphorus, carbon, boron group of elements or of a combination of these elements and an element from the aluminium, silicon, tin, antimony, germanium, indium, beryllium group or a combination from these elements, characterised in that at least one side of the glass-metal film (1) is provided with a top layer (5) comprising a material which is harder than the glass-metal film (1).

2. Object according to claim 1, characterised in that the glass-metal film (1) comprises inclusions of hard particles (3, 3a), which, as primary precipitates from the molten mass, are arranged mainly close to a free surface (4) of the solidified base material and/or so as to project beyond this, and that the top layer (5) is disposed on this surface (4).

3. Object according to claim 1 or 2, characterised in that the top layer (5) is disposed on an intermediate layer (10), which is applied to the glass-metal film (1) and which consists of a material which is different to that of the glass-metal film (1) and the top layer (5).

4. Object according to one of claims 1 to 3, characterised in that the top layer (5) comprises particles (8) of a hard material which consists essentially of a compound of at least one of the elements boron, carbon, nitrogen, oxygen, silicon or phosphorus, e.g. of diamond or cubic boron nitride.

5. Object according to claim 4, characterised in that the top layer (5) comprises a base layer (7), which is joined to the glass-metal film (1) or the intermediate layer (10) and in which the hard material particles (8) are embedded.

6. Object according to claim 5, characterised in that the base layer (7) consists essentially of at least one netal, which can be applied electrolytically (galvanically) to the glass-metal film (1) or the intermediate layer (10), from the silver, aluninium, cadmium, chromium, cobalt, copper, nickel, lead, tin, zinc group or an appropriate compound.

7. Object according to claim 5, characterised in that the base layer (7) consists essentially of at least one metal, e.g. aluminium, zinc, tin, lead or a combination of these metals, which can be applied to the glass-metal film (1) or the intermediate layer (10) by hot dip galvanizing.

8. Object according to claim 5, characterised in that the base layer (7) consists essentially of at least one metal, e.g. copper, nickel or a combination of these metals, which can be applied to the glass-metal film (1) or the intermediate layer (10) without current.

9. Object according to claim 5, characterised in that the base layer (7) consists essentially of at least one metal, e.g. cadmium, zinc or a combination of these metals, which can be applied to the glass-metal film (1) or the intermediate layer (10) by chemical/mechanical deposition.

10. Object according to claim 5, characterised in that the base layer (7) consists of a base material which can be applied to the glass-metal film (1) or the intermediate layer (10) by a spraying method, in particular thermal spraying.

11. Object according to claim 10, characterised in that the base material is a plastic, e.g. polyester.

12. Object according to claim 10, characterised in that the base material is a ceramic material, e.g. aluminium oxide.

13. Object according to one of claims 1 to 3, characterised in that the top layer (5) is formed by an essentially homogeneous layer of a hard material.

14. Object according to claim 13, characterised in that the hard material consists essentially of a material which can be applied to the glass-metal film (1) or the intermediate layer (lo) by deposition by chemical or physical means from the gaseous phase or thermal spraying, e.g. plasma spraying, e.g. diamond-like carbon or a compound of a metal and at least one of the elements boron, carbon, nitrogen, oxygen, silicon and phosphorus.

15. Object according to one of the preceding claims, characterised in that the glass-metal film (1) is in the form of a continuous strip.

16. Method for producing the object according to one of the preceding claims, characterised in that the glass-metal film (1) is fed to a coating device which applies a top layer (5) comprising a hard material to at least one side of the glass-metal film (1).

17. Method according to claim 16, characterised in that at least one intermediate layer (10), which consists of a material which is different to that of the glass-metal film (1) and the top layer (5), is firstly applied to the glass-metal film (1), and that the top layer (5) is applied to this intermediate layer (10).

18. Use of the object according to one of the preceding claims 1 - 15 as a parting tool.

19. Use of the object according to one of the preceding claims 1 - 15 as a structural part with special wear and/or sliding properties.

## Revendications

1. Objet avec une feuille en verre-métal au moins partiellement amorphe qui comporte un métal du groupe des éléments Fer, Nickel, Chrome, Cobalt, Vanadium ou d'une combinaison de ces éléments et un élément non métallique du groupe des éléments phosphore, carbone, bore ou d'une combinaison de ces éléments ainsi qu'un élément du groupe aluminium, silicium, étain, antimoine, germanium, indium, beryllium ou une combinaison de ces éléments, caractérisé en ce qu'au moins un côté de la feuille verre-métal (1) est pourvue d'une couche de recouvrement (5) qui comporte un matériau dont la dureté est supérieure à celle de la feuille de verre-métal (1).

2. Objet selon la revendication 1, caractérisé en ce que la feuille verre-métal (1) contient des inclusions de particules dures (3, 3a) qui sont disposées comme éliminations primaires de la fusion essentiellement à proximité d'une surface libre (4) du matériau de base solidifié et/ou en faisant saillie sur celle-ci, et en ce que la couche de recouvrement (5) est disposée sur cette surface (4).

3. Objet selon la revendication 1 ou 2, caractérisé en ce que la couche de recouvrement (5) est disposée sur une couche intermédiaire (10) appliquée sur la feuille verre-métal (1) qui est constituée d'un autre matériau que la feuille verre-métal (1) et la couche de recouvrement (5).

4. Objet selon l'une des revendications 1 à 3, caractérisé en ce que la couche de recouvrement (5) contient des particules (8) en une matière dure qui est constituée essentiellement d'une combinaison d'au moins un des éléments bore, carbone, azote, oxygène, silicium ou phosphore, par exemple d'un diamant ou d'un nitrure de bore cubique.

5. Objet selon la revendication 4, caractérisé en ce que la couche de recouvrement (5) comporte une couche de support (7) reliée à la feuille verre-métal (1) et, respectivement la couche intermédiaire (10), dans laquelle sont noyées les particules de matière dure (8).

6. Objet selon la revendication 5, caractérisé en ce que la couche de support (7) est constituée essentiellement d'au moins un métal applicable sur la feuille verre-métal (1) et, respectivement la couche intermédiaire (10) par électrolyse (galvanisation) du groupe argent, aluminium, cadmium, chrome, cobalt, cuivre, nickel, plomb, étain, zinc ou d'une composition correspondante.

7. Objet selon la revendication 5, caractérisé en ce que la couche de support (7) est constituée essentiellement d'au moins un métal applicable sur la feuille verre-métal (1) et, respectivement la couche intermédiaire (10) par immersion à chaud, par exemple d'aluminium, de zinc, d'étain, de plomb ou d'une combinaison de ces métaux.

8. Objet selon la revendication 5, caractérisé en ce que la couche de support (7) est constituée essentiellement d'au moins un métal applicable sans courant sur la feuille verre-métal (1) et, respectivement la couche intermédiaire (10), par exemple de cuivre, de nickel ou d'une combinaison de ces métaux.

9. Objet selon la revendication 5, caractérisé en ce que la couche de support (7) est constituée essentiellement d'au moins un métal applicable sur la feuille verre-métal (1) et, respectivement la couche intermédiaire (10) par séparation chimique/mécanique, par exemple de cadmium, de zinc ou d'une combinaison de ces métaux.

10. Objet selon la revendication 5, caractérisé en ce que la couche de support (7) est constituée d'un matériau de support applicable sur la feuille verre-métal (1) et, respectivement la couche intermédiaire (10) par un procédé de pulvérisation, notamment de pulvérisation thermique.

11. Objet selon la revendication 10, caractérisé en ce que le matériau de support est une matière synthétique, par exemple un polyester.

12. Objet selon la revendication 10, caractérisé en ce que le matériau de support est une matière céramique, par exemple un oxyde d'aluminium.

13. Objet selon l'une des revendications 1 à 3, caractérisé en ce que la couche de recouvrement (5) est constituée d'une couche essentiellement homogène en une matière dure.

14. Objet selon la revendication 13, caractérisé en ce que la matière dure est constituée essentiellement d'un matériau applicable sur la feuille verre-métal (1) et, respectivement la couche intermédiaire (10) par séparation chimique ou physique de la phase gazeuse ou par pulvérisation thermique, par exemple par projection au plasma, par exemple d'un carbone du type à diamant ou d'une combinaison entre un métal et au moins un des éléments bore, carbone, azote, oxygène, silice et phosphore.

15. Objet selon l'une des revendications précédentes, caractérisé en ce que la feuille verre-métal (1) est réalisée sous forme de bande sans fin.

16. Procédé de fabrication de l'objet selon l'une des revendications précédentes, caractérisé en ce que la feuille verre-métal (1) est amenée vers un dispositif de revêtement par lequel est appliquée une couche de recouvrement (5) sur au moins un côté de la feuille verre-métal (1) qui comporte une matière dure.

17. Procédé selon la revendication 16, caractérisé en ce qu'il est appliqué sur la feuille verre-métal (1) préalablement au moins une couche intermédiaire (10) qui est constituée d'un autre matériau que la feuille verre-métal (1) et la couche de recouvrement (5), et en ce que la couche de recouvrement (5) est appliquée sur cette couche intermédiaire (10).

18. Utilisation de l'objet selon l'une des revendications précédentes 1-15 comme outil séparateur.

19. Utilisation de l'objet selon l'une des revendications précédentes 1-15 comme composant ayant des caractéristiques d'usure et/ou de glissement particulières.
